Europäisches Patentamt

European Patent Office

Office européen des brevets

(19)

(11) EP 0 814 340 A1

(12) # DEMANDE DE BREVET EUROPEEN

(43) Date de publication:
29.12.1997 Bulletin 1997/52

(51) Int Cl.6: G01P 5/00

(21) Numéro de dépôt: 97401347.6

(22) Date de dépôt: 13.06.1997

(84) Etats contractants désignés:
AT BE CH DE DK ES FI FR GB GR IE IT LI LU MC
NL PT SE

(30) Priorité: 18.06.1996 FR 9607536

(71) Demandeur: SEXTANT AVIONIQUE
78141 Velizy Villacoublay (FR)

(72) Inventeurs:
• Galtier, Frédéric
94117 Arcueil Cedex (FR)

• Besson, Olivier
94117 Arcueil Cedex (FR)

(74) Mandataire: Guérin, Michel et al
THOMSON-CSF-S.C.P.I.,
13, Avenue du Président
Salvador Allende
94117 Arcueil Cédex (FR)

(54) Sonde vélocimétrique optique

(57)     L'invention concerne une sonde vélocimétrique optique comprenant des moyens pour éclairer un volume de mesure dans lequel peuvent passer des particules, et des moyens de détection optique pour produire un signal électrique x(t) en réponse au passage d'une particule dans le volume éclairé.

Elle comprend également des moyens pour extraire des informations représentatives de la vitesse v de particules, à partir du signal électrique, ces moyens comportant notamment :

- des moyens pour convertir le signal électrique x(t) en signal électrique complexe $\hat{x}$(t),
- des moyens pour établir une fonction autocorrélation $\Gamma_{\hat{x}}$(m) du signal x(t),
- des moyens pour estimer la vitesse v à partir du calcul de la phase $\phi_{\hat{x}}$(m) de la fonction $\Gamma_{\hat{x}}$(m).

Applications : Avionique.

FIG.1

EP 0 814 340 A1

**Description**

Le domaine de l'invention est celui des sondes vélocimétriques optiques permettant de définir la vitesse de particules en mouvement relatif par rapport à la sonde.

Il existe à l'heure actuelle des dispositifs optiques comprenant deux faisceaux lasers qui interfèrent de manière à générer un volume de mesure ellipsoïdal, consistant en des franges équidistantes sombres et lumineuses. Lorsqu'une particule en mouvement traverse ce volume de mesure, le signal recueilli par un photodétecteur comprend des indications relatives à la vitesse de cette particule par rapport à la sonde optique. Il est donc possible en analysant le signal recueilli de définir la vitesse d'une particule considérée.

Ce type de sonde peut être utilisé pour définir la vitesse de toute particule suffisamment petite devant les franges d'interférences créées et notamment pour définir la vitesse d'un aéronef, connaissant la vitesse relative de particules dans l'air par rapport audit aéronef équipé de ce type de sonde vélocimétrique.

En effet, en raison de progrès réalisés en matière de miniaturisation et de coût au niveau des sources laser et notamment des diodes laser, il devient possible de réaliser de telles sondes vélocimétriques optiques, embarquées à bord de l'aéronef dont on cherche à mesurer la vitesse.

Les performances de ce type de sonde sont directement dépendantes des moyens d'analyse du signal recueilli par un photodétecteur, pour en extraire le paramètre vitesse. C'est pourquoi l'invention a pour objet une sonde vélocimétrique optique du type de celle décrite précédemment et comprenant des moyens de détermination de vitesse très performants.

Plus précisément, l'invention a pour objet une sonde vélocimétrique optique comprenant des moyens pour éclairer un volume de mesure dans lequel peuvent passer des particules en mouvement relatif par rapport à la sonde, et des moyens de détection optique pour produire un signal électrique en réponse au passage d'une particule dans le volume éclairé, le spectre en fréquence de ce signal ayant une largeur centrée sur une fréquence dominante $f_o$, représentative de la vitesse relative de la particule par rapport à la sonde, cette sonde comportant des moyens numériques pour établir un vecteur x(t) représentant N échantillons du signal électrique détecté et étant caractérisée en ce qu'elle comporte :

- des moyens pour convertir le signal électrique x(t) en un signal complexe $\hat{x}(t)$;
- des moyens pour établir une fonction d'autocorrélation du signal complexe, ladite fonction étant définie de la façon suivante :

$$r_{\hat{x}}(m) = \sum_{t=-N}^{N-m} E\left\{ \hat{x}(t)\hat{x}(t+m) \right\}$$

où E {x} désigne l'espérance mathématique de la variable x.
- des moyens pour déterminer la phase $\phi_{\hat{x}}(m)$ de la fonction $r_{\hat{x}}(m)$ reliée à la partie imaginaire de ladite fonction ;
- des moyens pour déterminer la fréquence $f_o$ à partir de l'ensemble des couples

$$\left[ m, \phi_{\hat{x}}(m) \right]$$

- des moyens pour fournir une indication de vitesse v d'une particule par rapport à la sonde, à partir de la fréquence $f_o$.

Lorsque le signal électrique fourni par le photodétecteur résulte du rayonnement lumineux rétroréfléchi par une particule traversant un volume de mesure défini par les franges d'interférences résultant de deux faisceaux lumineux, le vecteur x(t) peut être défini comme suit :

$$x(t) = A.e^{-2\alpha^2 f^2 t^2} \cos(2\pi ft) + w(t)$$

avec

$\alpha$      un coefficient fixe
t      est le temps
w(t)      un terme de bruit

Les moyens employés pour transformer le signal x(t) réel en signal $\hat{x}$(t) complexe comprennent un filtre déphaseur de -π/2 du type filtre de Hilbert. Ce type de filtre permet de définir un signal complexe $\hat{x}$(t) associé au signal réel x(t) dont la partie réelle n'est autre que le signal de départ x(t) et la partie imaginaire est la sortie du filtre de Hilbert avec x(t) en entrée - soit encore

$$\hat{x}(t) = x(t) + j \, T.H.[x(t)]$$

Si T.H. est la transformée de Hilbert correspondant au résultat du filtrage du signal par le filtre de Hilbert.

Selon une variante de l'invention, les premiers et secondes moyens concernant le signal complexe $\hat{x}$(t) et la fonction d'autocorrélation $\hat{r}_x$(m) mis en oeuvre pour la détermination de la vitesse relative, peuvent avantageusement être regroupés de la manière suivante :

- détermination du spectre discret x(ω), du signal calculé par transformée de Fourier rapide (FFT), sur les N échantillons ;
- définition du nouveau spectre $\hat{x}$(ω) par

$$\hat{x}(\omega) = 2 \, |x(\omega)|^2 \text{ pour } \omega > 0$$

$$\hat{x}(\omega) = 0 \text{ pour } \omega < 0$$

- détermination de la transformée de Fourier inverse du spectre $\hat{x}$(ω) pour définir la fonction d'autocorrélation $r_{\hat{x}}$(m)

$$FFT^{-1}\left[\hat{x}(\omega)\right] = r_{\hat{x}}(m)$$

A partir de l'ensemble des points d'autocorrélation $\hat{r}_x$(m), on en définit l'ensemble des phases $\phi_{\hat{x}}$(m).

On peut alors estimer la fréquence $f_o = \hat{f}_d = \frac{\omega_d}{2\pi}$ en considérant que cette fréquence correspond à la valeur pour laquelle la fonction J(ω$_d$) est minimale avec :

$$J(\omega_d) = \sum_{m=1}^{M} \left| \phi_{\hat{x}}(m) - m\omega_d \right|^2$$

comme cela sera explicité ultérieurement.

Tous ces moyens utilisés dans l'invention seront détaillés plus amplement dans la description qui va suivre.

L'invention sera mieux comprise et d'autres avantages apparaîtront à la lecture de la description qui va suivre, donnée à titre non limitatif et grâce aux figures annexées par lesquelles :

- la figure 1 illustre un exemple de sonde vélocimétrique selon l'invention ;
- la figure 2 représente le volume de mesure dans lequel passe les particules dont on veut détecter la vitesse relative.

De manière générale, la sonde vélocimétrique optique de l'invention comprend deux faisceaux optiques interférant dans un volume de mesure.

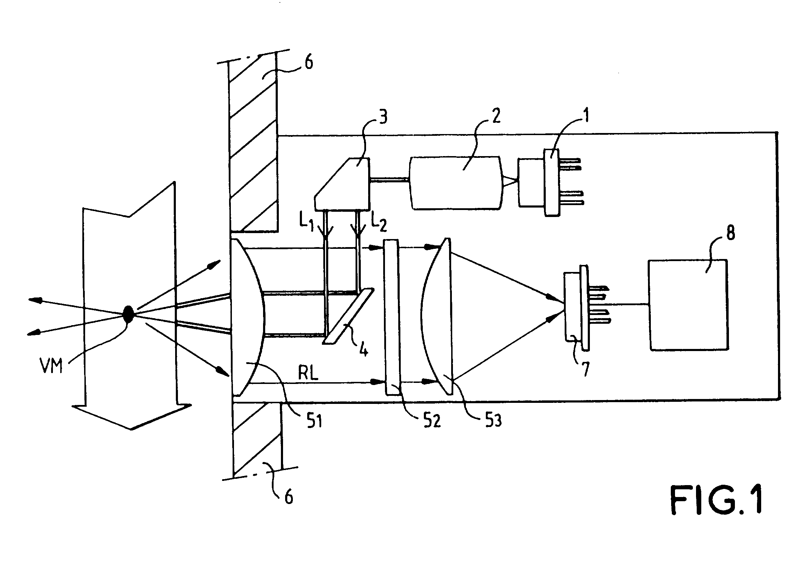

La figure 1 illustre un exemple de réalisation de sonde vélocimétrique montée à bord d'un aéronef, comprenant une source laser 1, pouvant être de type diode laser, en sortie de laquelle on dispose un collimateur 2, un diviseur de faisceau optique 3 créant deux faisceaux optiques L1 et L2 parallèles, dirigés au moyen d'un système de renvoi 4, vers une optique 51 en sortie de l'aéronef matérialisée par la peau de l'aéronef 6. L'optique 51 a pour fonction de faire converger les faisceaux lumineux L1 et L2, dans un volume dit volume de mesure MV, extérieur compris dans l'atmosphère dans laquelle circulent des particules constitutives d'aérosols atmosphériques. Ces aérosols renvoient de la lumière rétrodiffusée selon un faisceau lumineux RL, détecté par le photodétecteur 7, pouvant typiquement être une photodiode, via des optiques 51, 52, 53.

En sortie de la photodiode, la sonde vélocimétrique comprend des moyens de traitement du signal 8 comprenant des moyens de conversion du signal analogique en signal numérique, des moyens d'extraction d'informations de fréquence et des moyens de calcul de la vitesse relative des particules par rapport à l'aéronef.

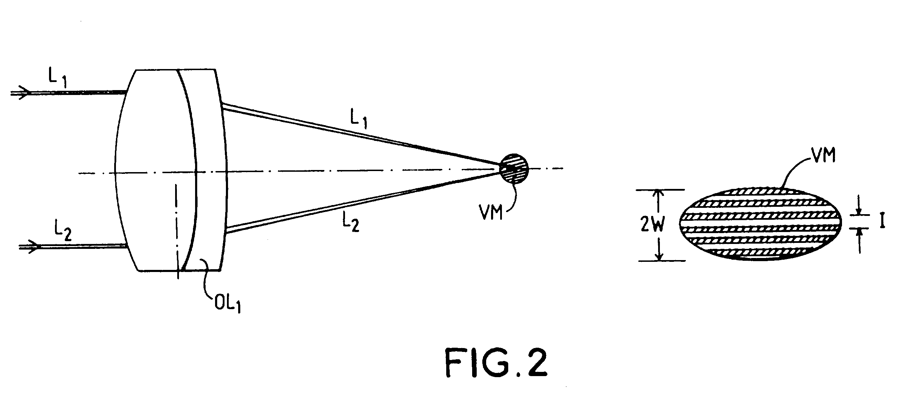

La figure 2 schématise le volume de mesure VM, constitué par les franges d'interférence des deux faisceaux optiques L1 et L2. La largeur 2W représente la largeur totale de ce volume, I étant la largeur d'interfrange.

La sonde selon l'invention comprend les moyens 8 de traitement du signal recueilli au niveau du photodétecteur 7, permettant de déterminer avec une grande précision la vitesse d'une particule traversant le volume de mesure VM.

Nous allons décrire les moyens 8 en rappelant tout d'abord les considérations suivantes :

Lorsqu'une particule ayant une vitesse relative v par rapport au volume de mesure VM, pénètre dans ce réseau d'interfranges, la lumière rétrodiffusée par cette particule et recueillie par le photodétecteur 5, après échantillonnage, fournit un signal s(t) dont le modèle mathématique est connu :

$$s(t) = e^{-2(v/w)^2 t^2} \cos(2\pi v/l.t)$$

avec t = 0, ±1 ... ± 3w/v

où

- v représente la vitesse de la particule ;
- 2w la largeur totale des franges d'interférences définissant le volume de mesure comme l'illustre la figure 2 ;
- I la largeur d'interfrange

avec $\alpha = l/w$ et $f_d = v/l$

$$s(t) = A.e^{-2\alpha^2 fd^2 t^2} \cos(2\pi f_d t)$$

Le terme de phase de ce signal est celui qui apparaît dans la modulation en cosinus de l'amplitude, soit $2\pi f_d t$. On peut alors montrer en considérant le spectre s(t) que le signal analytique associé à celui-ci s'exprime par:

$$\hat{s}(t) = s(t) + j.T.H.[s(t)]$$

si T.H. est la transformée de Hilbert du signal temporel s(t), résultat du filtrage de ce signal par le filtre de Hilbert h(t)

$$\hat{s}(t) = s(t) + j[h(t) * s(t)]$$

soit encore

$$\hat{s}(t) = e^{-2\alpha^2 fdt^2}.\cos(2\pi f_d t) + je^{(-2\alpha^2 fd^2 t^2)} \cos\left(2\pi fdt - \frac{\pi}{2}\right)$$

$$= e^{-2\alpha^2 f_d t^2} e^{j(2\pi f_d t)}$$

Dans le cas réel de la sonde vélocimétrique le signal reçu au niveau du photodétecteur comprend un terme de bruit w(t) que l'on peut considérer comme un bruit réel blanc Gaussien de moyenne nulle et de variance $\sigma^2$.

Ainsi le signal détecté est le signal x(t) avec x(t)=A s(t) + w(t) avec A amplitude dépendante de la taille de la particule de la puissance lumineuse incidente et du coefficient de transmission de la partie réceptrice.

On a donc

$$\hat{x}(t) = \left[A\,s(t) + w(t)\right] + j.T.H\left[A\,s(t) + w(t)\right]$$
$$= A.\hat{s}(t) + \hat{w}(t)$$
$$= A.e^{-2\alpha^2 f_d^2 t^2} e^{j(2\pi f_d t)} + \hat{w}(t)$$

où $\hat{w}(t)$ est le signal analytique associé au bruit réel w(t) et est un bruit blanc Gaussien complexe de moyenne nulle et de même variance $\sigma^2$.

A partir du signal analytique $\hat{x}(t)$ on définit M échantillons de la fonction d'autocorrélation $r_{\hat{x}}(m)$ avec

$$r_{\hat{x}}(m) = \sum_{t=-N}^{N-m} E\{ \hat{x}^*(t)x(t+m) \}$$

Pour un signal échantillonné bruité, la fonction d'autocorrélation de ce signal présente un énorme avantage sur le signal temporel dans la mesure où seul l'échantillon en m=0 est bruité.

On peut donc considérer à partir de $\hat{x}(t)=A.\hat{s}(t)+\hat{\omega}(t)$ et des fonctions de corrélations associées, c'est-à-dire :

$$r_{\hat{s}}(m) = \sum_{t=-N}^{N-m} \hat{s}^*(t)\hat{s}(t+m)$$

$$r_{\hat{\omega}}(m) = \sum_{t=-N}^{N-m} E\{ \hat{w}^*(t)\hat{w}(t+m) \} = (2N+1-m)\sigma^2\delta(m)$$

que $r_x(m) = A^2 r_s(m)+(2N+1-m)\sigma^2\delta(m)$

Plus précisément la fonction d'autocorrélation $r_{\hat{s}}(m)$ peut être écrite sous la forme suivante :

$$r_{\hat{s}}(m) = \sum_{t=-N}^{N-m} e^{-2\alpha^2 f_d t^2} . e^{-j2\pi f_d t} . e^{-2\alpha^2 f_d (t+m)^2} e^{j2\pi f_d (t+m)}$$

$$= \sum_{t=-N}^{N-m} e^{-2\alpha^2 f_d t^2} . e^{2\alpha^2 f_d (t+m)^2} . e^{j2\pi f_d m}$$

$$= \sum_{t=-N}^{N-m} e^{-4\alpha^2 f_d t(t+m)} . e^{2\alpha^2 f_d^2 m^2} . e^{j2\pi f_d m}$$

$$= \gamma(m) e^{-2\alpha^2 f_d^2 m^2} e^{j2\pi f_d m}$$

avec

$$\gamma(m) = \sum_{t=-N}^{N-m} e^{-4\alpha^2 f_d^2 t(t+m)}$$

La phase de la fonction d'autocorrélation $r_{\hat{s}}(m)$ est définie par $\phi_{\hat{s}}(m) = 2\pi f_d m$.

On peut ainsi faire une estimation sur la fréquence recherchée $2\pi\tilde{f}_d$ en recherchant l'argument minimal de la fonction

$$J(\tilde{f}_d) = \sum_{m=1}^{M} \left| \phi_{\hat{x}}(m) - 2\pi f_d m \right|^2 .$$

Ceci revient à rechercher la valeur pour laquelle la fonction dérivée première $J'(f_d)$ est nulle. Soit encore avec $\omega_d = 2\pi f_d$.

$$J(\omega_d) = \sum_{m=1}^{M} \left| \phi_{\hat{x}}(m) - m\omega_d \right|^2$$

$$= \sum_{m=1}^{M} \hat{\phi}_{\hat{x}}^2(m) - 2\phi_{\hat{x}}(m)m\omega_d + m^2\omega_d^2$$

$$J'(\omega_d) = \sum_{m=1}^{M} -2\phi_{\hat{x}}(m)m + 2m^2\omega_d$$

$$= +2 \sum_{m=1}^{M} m\left[ m\omega_d - \phi_{\hat{x}}(m) \right]$$

$$J'(\tilde{\omega}_d) = 0 \implies \sum_{m=1}^{M} m^2\tilde{\omega}_d = \sum_{m=1}^{M} m\phi_{\hat{x}}(m)$$

Soit encore

$$\tilde{\omega}_d = \frac{\sum_{m=1}^{M} m\phi_{\hat{x}}(m)}{\sum_{m=1}^{M} m^2}$$

On a donc la fréquence estimée

$$\tilde{\omega}_d = 2\pi \tilde{f}_d$$

définie par

$$\tilde{\omega}_d = \frac{1}{\sum_{m=1}^{M} m^2} \sum_{m=1}^{M} m\phi_{\hat{x}}(m) = \frac{6}{M(M+1)(2M+1)} \sum_{m=1}^{M} m\phi_{\hat{x}}(m)$$

Les valeurs $\phi_{\hat{x}}(m)$ sont calculées à partir des valeurs d'autocorrélation $r_{\hat{x}}(m)$ avec $\phi_{\hat{x}}(m)$ définie par la partie imaginaire du logarithme complexe, ou bien encore comme l'arctg

$$\left[ \frac{Im\, r_{\hat{x}}(m)}{Re\, r_{\hat{x}}(m)} \right].$$

Si Im $^r\hat{x}(m)$ correspond à la partie imaginaire de $^r\hat{x}(m)$.

et Re $^r\hat{x}(m)$ correspond à la partie réelle de $^r\hat{x}(m)$.

Selon un mode de réalisation, la sonde vélocimétrique de l'invention comprend les moyens suivants pour directement estimer $^r\hat{x}(m)$ à partir des (2N+1) échantillons prélevés sur le signal délivré par le photodétecteur dont est équipé la sonde.

- des moyens pour calculer la FFT de x(t) pour N instants t=-D, 0, +N ;
- des moyens pour calculer les valeurs du spectre discret $X(\omega)$ ;
- des moyens pour calculer les valeurs du spectre discret $\bar{X}(\omega)$
  défini par

$$\bar{X}(\omega) = \begin{cases} 2|X(\omega)|^2 & \text{pour } \omega > 0 \\ 0 & \text{pour } \omega < 0 \end{cases} ;$$

- des moyens pour calculer la FFT inverse de $\hat{X}(\omega)$ avec

$$FFT^{-1}\left[\hat{X}(\omega)\right] = r_{\hat{x}}(m).$$

Ainsi connaissant M points d'autocorrélation $^r\hat{x}(m)$ et donc M phases $^\phi\hat{x}(m)$, on est en mesure d'estimer $\tilde{\omega}_d$. On peut montrer que cette estimation est optimale pour des valeurs

$$N_{opt} \approx \frac{3}{2\alpha f_d} \approx \frac{3W}{2V}$$

et

$$M_{opt} \approx \frac{N_{opt}}{3} = \frac{W}{2V}$$

si V correspond à la vitesse de la particule dans le volume de mesure.

## Revendications

1. Sonde vélocimétrique optique comprenant des moyens pour éclairer un volume de mesure dans lequel peuvent passer des particules en mouvement relatif par rapport à la sonde, et des moyens de détection optique pour produire un signal électrique en réponse au passage d'une particule dans le volume éclairé, le spectre en fréquence de ce signal ayant une largeur centrée sur une fréquence dominante $f_o$, représentative de la vitesse relative de la particule par rapport à la sonde, cette sonde comportant des moyens numériques pour établir un vecteur x(t) représentant N échantillons du signal électrique détecté et étant caractérisée en ce qu'elle comporte :

   - des moyens pour convertir le signal électrique x(t) en un signal complexe $\hat{x}(t)$ présentant une partie réelle et une partie imaginaire, ladite partie imaginaire comprenant un terme de phase dépendante de $f_d$ ;
   - des moyens pour établir une fonction d'autocorrélation du signal complexe, ladite fonction étant définie de la façon suivante :

$$r_{\hat{x}}(m) = \sum_{t=-N}^{N-m} E\{ \ \hat{x}(t)\hat{x}(t+m) \ \}$$

où E {x} désigne l'espérance mathématique de la variable de x.

- des moyens pour déterminer la phase $\phi_{\hat{x}}(m)$ de la fonction $r_{\hat{x}}(m)$ dépendante de la partie imaginaire de ladite fonction ;

- des moyens pour déterminer la fréquence $f_d$ à partir de l'ensemble des couples

$$\left[m, \phi_{\hat{x}}(m)\right]$$

- des moyens pour fournir une indication de vitesse v d'une particule par rapport à la sonde, à partir de la fréquence $f_d$.

2. Sonde vélocimétrique optique selon la revendication 1, caractérisée en ce que le vecteur x(t) est défini par l'équation suivante :

$$x(t) = A.e^{-2\alpha^2 fd^2 t^2} \cos(2\pi ft) + w(t)$$

avec

$\alpha$ un coefficient fixe
t est le temps
w(t) un terme de bruit

3. Sonde vélocimétrique optique selon l'une des revendications 1 ou 2, caractérisée en ce que les moyens pour transformer le signal réel x(t) en signal complexe $\hat{x}(t)$ comprennent des moyens du type filtre de Hilbert.

4. Sonde vélocimétrique selon l'une des revendications 1 à 3, caractérisée en ce que les moyens pour définir la fonction complexe $\hat{x}(t)$ et les moyens pour définir la fonction $r_{\hat{x}}(m)$ comprennent les moyens suivants :

* des moyens pour définir la fonction transformée de Fourier x($\omega$), de la fonction x(t) sur N échantillons ;
* des moyens pour élaborer la fonction $\hat{X}(\omega)$ telle que :

$$\hat{X}(\omega) = 2 |X(\omega)|^2 \qquad \text{si } \omega > 0$$

$$\hat{X}(\omega) = 0 \qquad \text{si } \omega < 0$$

* des moyens pour définir la fonction $r_{\hat{x}}(m) = FFT^{-1}[X(\omega)]$. Si $FFT^{-1}$ désigne la transformée de Fourier inverse.

5. Sonde vélocimétrique selon l'une des revendications 1 à 4, caractérisée en ce que les moyens pour définir la fréquence $f_d$ comprennent des moyens pour rechercher la valeur de fréquence pour laquelle la fonction

$$J(f) = \sum_{m=1}^{M} \left| \phi_{\hat{x}}(m) - 2\pi m f \right|^2$$

est minimale.

6. Sonde vélocimétrique selon la revendication 5, caractérisée en ce que la valeur $f_d$ est estimée par $\tilde{f}_d$

$$2\pi \tilde{f}_d = \frac{6}{M(M+1)(2M+1)} \sum_{m=1}^{M} \phi_{\hat{x}}(m)$$

M étant le nombre de points d'autocorrélation.

7. Sonde vélocimétrique selon l'une des revendications 1 à 6, caractérisée en ce que la phase $\phi_{\hat{x}}(m)$ est déterminé par l'élément

$$\text{arctg}\left[\frac{\text{Im}.r_{\hat{x}}(m)}{\text{Re}.r_{\hat{x}}(m)}\right]$$

avec

Im. $r_{\hat{x}}(m)$ : la partie imaginaire de $r_{\hat{x}}(m)$
Re. $r_{\hat{x}}(m)$ : la partie réelle de $r_{\hat{x}}(m)$

FIG.1

FIG.2

**Office européen des brevets**

**RAPPORT DE RECHERCHE EUROPEENNE**

Numero de la demande
EP 97 40 1347

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 5 005 144 A (TSUYOSHI NAKAJIMA ET AL)<br>* colonne 1, ligne 53 - colonne 2, ligne 60; figures 1,2 *<br>--- | 1 | G01P5/00 |
| Y | EP 0 268 519 A (OFFICE NATIONAL D'ATUDES ET DE RECHERCHES AEROSPATIALES)<br>* page 3, ligne 15 - ligne 43; figure 1 *<br>--- | 1 | |
| Y | PATENT ABSTRACTS OF JAPAN<br>vol. 17, no. 36 (P-1474), 22 Janvier 1993<br>& JP 04 254768 A  (NIPPON HOSO KYOKAI), 10 Septembre 1992,<br>* abrégé *<br>--- | 3 | |
| Y | PATENT ABSTRACTS OF JAPAN<br>vol. 12, no. 411 (P-779), 31 Octobre 1988<br>& JP 63 147265 A  (TOSHIBA), 20 Juin 1988,<br>* abrégé *<br>--- | 3 | |
| A | EP 0 645 645 A (SEXTANT AVIONIQUE)<br>* abrégé; figure 1 *<br>--- | | **DOMAINES TECHNIQUES RECHERCHES (Int.Cl.6)** |
| A | US 3 738 750 A (H. T. KALB ET AL)<br>* colonne 2, ligne 57 - colonne 3, ligne 26; figure 1 *<br>----- | | G01P<br>G01S<br>G01F<br>G01R<br>G06F |

Le présent rapport a été établi pour toutes les revendications

| Lieu de la recherche | Date d'achèvement de la recherche | Examinateur |
|---|---|---|
| BERLIN | 23 Septembre 1997 | Breusing, J |

EPO FORM 1503 03.82 (P04C02)